# EUROPÄISCHE PATENTSCHRIFT

(11) **EP 1 710 264 B1**
(45) Veröffentlichungstag und Bekanntmachung des Hinweises auf die Patenterteilung: **26.08.2009**
(21) Anmeldenummer: 06007225.3
(22) Anmeldetag: 05.04.2006
(51) Int. Cl.: C08G 59/14, C08L 63/00, C08G 73/06, C08G 16/02, C08G 63/692

(54) **Phosphororganische Verbindungen enthaltende Prepolymere und Verwendungen dafür**
Prepolymers containing phosphor organic compounds and their use
Prépolymères contenant des composés phosphore organiques et leur utilisation

(30) Priorität: 05.04.2005 DE 102005015605
(43) Veröffentlichungstag der Anmeldung: 11.10.2006
(73) Patentinhaber: Schill + Seilacher "Struktol" Aktiengesellschaft, 22113 Hamburg (DE)
(72) Erfinder: Bauer, Monika, 15754 Senzig (DE); Just, Berthold, 22397 Hamburg (DE)
(74) Vertreter: Katzameyer, Michael

(56) Entgegenhaltungen:
- GB-A- 2 021 590
- US-A1- 2002 032 279
- US-A1- 2003 073 781
- US-B1- 6 613 848
- DATABASE CA [Online] CHEMICAL ABSTRACTS SERVICE, COLUMBUS, OHIO, US; 7. Mai 2003 (2003-05-07), HUANG, KUNYUAN ET AL HUANG, KUNYUAN ET AL: "Fire-resistant phenolic epoxy resins having dihydro- oxaphosphaphenanthrene oxide groups on their side chains and fire-resistant resin compositions containing the same Fire-resistant phenolic epoxy resins having dihydro- oxaphosphaphenanthrene oxide groups on their side chains and fire-resis" XP002435320 gefunden im STN Database accession no. 2003:344089 -& CN 1 339 538 A (CHANGCHUN ARTIFICIAL RESIN PLANT CO., LTD., PEOP. REP. CHINA CHANGCHUN) 13. März 2002 (2002-03-13)
- DATABASE WPI Week 200124 Derwent Publications Ltd., London, GB; AN 2001-228737 XP002435347 -& JP 2000 309623 A (TOTO KASEI KK) 7. November 2000 (2000-11-07)
- DATABASE WPI Week 200242 Derwent Publications Ltd., London, GB; AN 2002-393608 XP002435348 -& JP 2002 053633 A (NIPPON KAYAKU KK) 19. Februar 2002 (2002-02-19)

## Beschreibung

Die vorliegende Erfindung betrifft Prepolymere, die durch Umsetzung von Harzen mit phosphororganischen Verbindungen auf Basis von Phosphinsäurederivaten hergestellt wurden, sowie deren Verwendung zur Herstellung von flammfesten Polymeren, insbesondere Duromeren, und die damit hergestellten Polymere.

Die Verwendung von Phosphinsäurederivaten als Flammschutzmittel für Harze, insbesondere Epoxidharze, ist bereits grundsätzlich bekannt. So beschreibt EP 0 799 847 phosphormodifizierte Epoxidharzmischungen aus Epoxidharzen, einer bestimmten Phosphinatverbindung und einem Härter, die Flammschutzeigenschaften aufweisen. Die deutsche Patentanmeldung DE 196 19 095 offenbart Derivate der 4-Hydroxy-1,3-butadien-1-phosphinsäure bzw. ihres intramolekularen Esters als Flammschutzmittel für Epoxidharze. Die noch unveröffentlichte deutsche Patentanmeldung DE 103 59 269.5 beschreibt die Verwendung von hydroxylgruppenhaltigen Phosphinaten zur Herstellung von Flammschutzmitteln, die sich zur Einbettung in Polymere eignen, und damit hergestellte flammgeschützte Polymere.

US 2003/0073781 und US 2002/0032279 von Hwang et al. beschreiben eine flammschützende Harz-Zusammensetzung, die ein phosphorhaltiges Harz, einen stickstoffhaltigen Harzhärter und einen Härtungspromoter umfasst. Das phosphorhaltige Harz dieser Zusammensetzung wird durch die Umsetzung eines herkömmlichen Epoxidharzes mit 9,10-Dihydro-9-oxa-10-phosphaphenanthren-10-oxid (DOPO) (Formel Ia in der vorliegenden Anmeldung) hergestellt und dessen Flammschutzeigenschaften offenbart.

US-B1-6 613 848 offenbart Prepolymere, die durch Umsetzung eines Phosphinsäurederivats (u.a. DOPOFORM) mit verschiedenen Harzen, insbesondere Phenolharzen, nicht jedoch Epoxidharzen, hergestellt werden und dann mit Epoxidharzen gemischt und zur Herstellung flammfester Polymere verwendet werden.

In GB-A-2 021 590 wird ein Prepolymer beschrieben, welches durch Umsetzung von DOPO und Monomeren, die zu einem ungesättigten Polyester führen, erhalten wird.

Huang et al. in CA 2003-05-03 und der Abstract Derwent XP002435348 beschreiben die Kondensationsreaktion eines Phosphinsäurederivats (z.B. DOPOFORM) mit Phenolen und die weitere Umsetzung des Zwischenprodukts mit Epoxidharzen zur Herstellung flammfester Polymere.

Im Abstract Derwent XP002435347 werden Prepolymere auf der Basis von Epoxidharzen und DOPO-Derivaten, nicht jedoch DOPOFORM, offenbart, welche als Flammschutzmittel geeignet sind.

Die direkte Umsetzung des Derivats DOPOFORM mit Epoxidharzen oder die Herstellung zähmodifizierter Prepolymere wird in keiner dieser Druckschriften in Betracht gezogen.

Mit den im Stand der Technik bekannten Flammschutzmitteln auf Phosphinatbasis lassen sich polymere Epoxidharze und andere Polymere mit guter Flammfestigkeit herstellen. Allerdings sind die phosphinathaltigen Ausgangszusammensetzungen zur Herstellung flammfester Polymere des Standes der Technik oft schwierig zu handhaben (z. B. schlechte Löslichkeit in den Harzkomponenten, Auskristallisation bei der Lagerung) und deshalb für bestimmte Anwendungsgebiete wie Klebstoffe, Laminierharze und Beschichtungen schlecht oder gar nicht geeignet. Ferner neigen die Monomere in der Zusammensetzung zur Kristallisation und verbleiben bei nicht vollständiger Umsetzung während der Polymerisationsreaktion im Endprodukt und beeinträchtigen dessen Homogenität und Eigenschaften. Auch die Umweltfreundlichkeit dieser Zusammensetzungen ist aufgrund des Toxizitätspotentials der reaktiven Monomere nicht optimal.

Eine Hauptaufgabe der vorliegenden Erfindung war somit die Bereitstellung von verbesserten und vielseitiger einsetzbaren Zusammensetzungen zur Herstellung von flammfesten Polymeren, insbesondere Duromeren. Eine damit in Zusammenhang stehende speziellere Aufgabe war die Bereitstellung von Zusammensetzungen zur Herstellung von flammfesten Polymeren, insbesondere Duromeren, die außerdem eine gewünschte Bruchzähigkeit aufweisen. Ein weitere Aufgabe war die Bereitstellung der unter Verwendung der erfindungsgemäßen Zusammensetzungen hergestellten Polymeren selbst.

Erfindungsgemäß wurde nun festgestellt, dass die oben genannte Hauptaufgabe gelöst werden kann durch Bereitstellung eines Prepolymers nach Anspruch 1, das durch Umsetzung eines Epoxidharzes mit einem Phosphinsäurederivat wie in Anspruch 1 definiert hergestellt wurde. Ferner wurde festgestellt, dass durch Inkorporation eines Zähmodifikators in dieses Prepolymer die Zähigkeit des Prepolymers bzw. eines damit hergestellten Polymeren nach Wunsch einstellbar ist, so dass auch die obige zusätzliche Aufgabe der Erfindung mit einem solchen Prepolymer erfüllt werden kann. Speziellere Ausführungsformen der vorliegenden Erfindung sind Gegenstand der abhängigen Ansprüche.

### Beschreibung der Erfindung

Die vorliegende Erfindung betrifft ein Prepolymer für flammfeste Polymere, insbesondere Duromere, welches erhalten wird durch Umsetzung eines Phosphinsäurederivats der folgenden Formel Ib (DOPOFORM),,
mit .

einem Derivat von 1:9, 10-Dihydro-9-oxa-10-phosphaphenanthren-10-oxid (DOPO) (Ia), mit einem Epoxidharz.

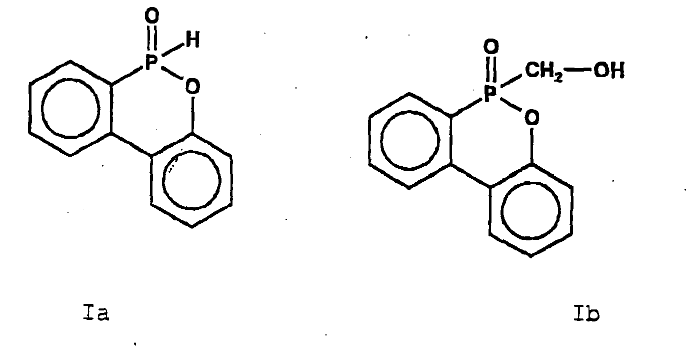

Als Harzmonomere kommen alle Epoxidharze in Frage, die mit dem erfindungsgemäßen Phosphinsäurederivat reagieren können. Einige geeignete, nicht-beschränkende Beispiele für solche Epoxidharze sind Bisphenol-A-diglycidether (DGEBA), Bisphenol-F-diglycidether (DGEBF), Bis(3-glycidyloxypropyl)tetramethyldisiloxan (BGTMSI), Triglycidyl-p-aminophenol (TGPAP), Cyclohexandimethanoldiglycidether (Polypox R11), Glycerintriglycidether (Polypox R12), Neopentylglykoldiglycidether (Polypox R14), Pentaerythrittetraglycidether (Polypox R16), Polypropylenglykoldiglycidether (Polypox R19), Trimethylolpropantriglycidether (Polypox R20) und Glycidylmethacrylat (GMA). Die erfindungsgemäß eingesetzten Polypox-Harze wurden von der UPPC AG bezogen, Araldite MY0510 von Huntsman Advanced Materials. Analoge Harze anderer Hersteller können jedoch ebenfalls verwendet werden.

Bei der Umsetzung zu den erfindungsgemäßen Prepolymeren werden ein oder mehrere Epoxidharze wie oben definiert mit dem Phosphinsäurederivat wie oben definiert unter kontrollierten Bedingungen umgesetzt, so dass nur oligomere Produkte, jedoch noch keine Polymere entstehen. Diese Einstellung ist für den Fachmann durch Festlegung der üblichen Reaktionsparameter, z.B. der Reaktionsdauer, Reaktionstemperatur, der Wahl von Reaktionspartnern mit einer gewünschten Reaktivität, sowie gegebenenfalls durch Menge und Art eines Katalysators unschwer möglich. Die vorliegende Beschreibung enthält zahlreiche Herstellungsbeispiele erfindungsgemäßer Prepolymere, die hier zur Orientierung dienen können.

Vorzugsweise wird die Umsetzung in Gegenwart eines üblichen Katalysators oder Beschleunigers erfolgen. Der Katalysator wird in Abhängigkeit von der chemischen Zusammensetzung des herzustellenden Prepolymers bzw. des herzustellenden Polymers gewählt werden und geeignete Katalysatoren für ein breites Spektrum von Harzen sind dem Fachmann bekannt.

Einige nicht-beschränkende Beispiele von Katalysatoren für die Herstellung von Prepolymeren, die ein Epoxidharz enthalten, sind z.B. 3-Dimethylamino-1-propylamin (DMAPA), Triethanolamin, Benzyldimethylamin (BDMA), Imidazol und seine Derivate, z.B. 2-Methylimidazol, 2-Phenylimidazol, 2-Ethyl-4-methylimidazol, oder Diazabicycloundecan (DBU) und Triphenylphosphin (TPP). Geeignete Katalysator-Konzentrationen sind z.B. in der Tabelle 2 angegeben, können jedoch nach Bedarf vom Fachmann unschwer variiert werden.

Die folgende Tabelle 1 gibt einige Beispiele für erfindungsgemäße DOPO-Epoxidharze und typischerweise eingesetzte Molverhältnisse zwischen Phosphinsäurederivat und Harzkomponenten an:

**Tabelle 1**

| - | **OH- Ausgangsstoff** | **EP-Ausgangsstoff** | **Äquivalent- verhältnis OH:EP** | **Molverhältnis** |
|---|---|---|---|---|
| DOPO-EP **1** | DOPOFORM | DGEBA BisphenolA-Diglycidether | 1:2 | 1:1 |
| DOPO-EP **2** | DOPOFORM | BGTMSI Bis(3-glycidyloxypropyl)tetramethyldisiloxan | 1:2 | 1:1 |
| DOPO-EP **3** | DOPOFORM | DGEBF BisphenolF-Diglycidether | 1:2 | 1:1 |
| DOPO-EP **4** | DOPOFORM | Araldite MY0510 Triglycidyl-p-aminophenol | 1:3 | 1:1 |
| DOPO-EP **5** | DOPOFORM | Polypox R12 Glyzerintriglycidether | 1:2 | 3:2 |
| DOPO-EP **6** | DOPOFORM | Polypox R16 Pentaerythrittetraglycidether | 1:2 | 2:1 |
| DOPO-EP **7** | DOPOFORM | Polypox R20 Trimethylolpropantriglycidether | 1:2 | 3:2 |
| DOPO-EP **8** | DOPOFORM | Araldite MY0510 Triglycidyl-p-aminophenol | 1:2 | 3:2 |

### Allgemeine Synthesevorschrift:

Das DOPOFORM wird im EP-Harz unter Rühren und Erwärmen im Ölbad (160-170°C) aufgelöst, nach etwa 30-45 min entsteht eine klare Mischung.
Man nimmt die Mischung aus dem Bad, lässt sie unter Rühren auf 125-130°C abkühlen und gibt sofort den Katalysator zu, da bereits nach wenigen Minuten das DOPOFORM beginnt wieder auszufallen (Trübung). Als Katalysator werden z.B. 5 mol% (berechnet auf die EP-Gruppen) DMAPA (3-Dimethylamino-1-propylamin) verwendet.

Nach Abklingen der exothermen Reaktion wird weiter im Ölbad (Temperatur und Zeit siehe Tabelle 2) erwärmt. Abschließend wird das Prepolymer auf Alufolie gegossen und man lässt es dort erkalten.

Tabelle 2 gibt die Reaktionsbedingungen und charakteristischen Eigenschaften (z.B. Mn, Mw, P-Gehalt) verschiedener solcher DOPO-Epoxidharze an.

**Tabelle 2 : Prepolymere**

| **Zusammensetzung** | **Ansatz-Nr.** | **Katalysator** | **Reaktions-bedingungen** (Badtemp.) | **GPC** | | **P** |
|---|---|---|---|---|---|---|
| | | | | **Mn** | **Mw** | **%** |
| 0,01 mol DOPOFORM in 0,01 mol DGEBA gelöst | **G2174/1b** | | 4,5h 170°C | 607 (THF) | 940 | 5,55 |
| | **G2231/3** | DMAPA (20 mol% v.EP) | 1,5h 170°C | | | 4,69 |
| | **G2231/4** | DMAPA (5mol% v. EP) PE110 (15 mol% v.EP) | 1h 170°C | 662 (THF) | 1310 | 6,1 |
| | **G2235** | DMAPA (5 mol% v.EP) | 2h170°C | 620 (THF) | 1000 | 4,93 |
| 0,01 mol DOPOFORM in 0,01 mol BGTMSi gelöst | **G2174/2b** | DMAPA (5 mol% v.EP) | 4,5h 170°C | 558 (THF) | 1000 | 5,55 |
| 0,01 mol DOPDFORM in 0,01 mol DGEBF gelöst 0,01 mol DGEBF gelöst | **G2174/3a** | DMAPA (5 mol% v.EP) DMAPA (5 mol% v.EP) | 1h 170°C | 473 (THF) | 550 | 5,99 |
| 0,01 mol DOPOFORM in 0,01 mol MY0510 gelöst | **G2174/4b** | DMAPA (5 mol% v.EP) | 4,5h 170°C | 6630 (DMF) | 23000 | 5,91 |
| | **dd-P155-** | DMAPA (5 mol% v.EP) | 70' 150°C | 430 (THF) | 530 | |
| 0,03 mol DOPOFORM in 0,02 mol R12 gelöst | **G2193/5** | DMAPA (5 mol% v.EP) | 2h 170°C | 604 (THF) | 810 | 5,65 |
| 0,02 mol DOPOFORM in 0,01 mol R16 gelöst | **G2193/6** | DMAPA (5 mol% v.EP) | 2h 170°C | 670 (THF) | 1030 | 5,18 |
| 0,03 mol DOPOFORM in 0,02 mol R20 gelöst | **G2193/7** | DMAPA (5 mol% v,EP) | 2h 170°C | 580 (THF) | 780 | 5,65 |
| 0,03 mol DOPOFORM in 0,02 mol MY0510 gelöst | **G2206/1b** | DMAPA (5 mol% v.EP) | 20' 150°C | 593 (DMF) | 968 | 6,70 |
| | **G2206/2a** | DMAPA (5 mol% v.EP) | 1 h 130°C | 1225 (DMF) | 1455 | |
| | **G2206/3a** | DMAPA (10 mol% v.EP) | 1h 150°C | 634 (DMF) | 980 | |
| | **G2206/3b** | DMAPA (5 mol% v.EP) | 1h 150°C | 669 (DMF) | 1230 | |
| | **G2206/3c** | DMAPA (2,5 mol% v.EP) | 1h 150°C | 601 (DMF) | 951 | |
| | **G2206/3d** | DMAPA (1 mol% v.EP) | 1h 150°C | 569 (DMF) | 1032 | |
| **1**. 0,01mol DOPOFORM in 3mmol PE110 gelöst | **G2234/2** | DMAPA (20 mol% v.EP) | 1h20min 170°C | 582 (DMF) | 6200 | 6,1 |
| **2**. + 0,01 mol DGEBA | | | | | | |
| **1**. 0,1mol DOPOFORM in 0,03 mol PE110 gelöst | **G2237** | DMAPA (5 mol% v.EP) | 2h170°C | 563 (THF) | 1070 | 6,02 |
| **2**. +0,1molDGEBA | | | | | | |
| **1**. 0,05mol DOPOFORM in 0,05 mol PE110 gelöst | **G2242** | --- | 40min 170°C | 426 (THF) | 777 | 8,24 |
| **2**. + 0,05 molDGEBA | | | | | | |
| **1**. 3mmol PE110 in 3mmol DGEBA gelöst | **G2233/1** | --- | 40min 140°C | --- | --- | 7,15 |
| **2**. + 3mmol Ukanol RD | | | | | | |
| **1**. 3mmol PE110 in 3mmol Ukanol DOP gelöst | **G2233/2** | TTP (2,5mol%v.EP) | 4h 150°C | | | 7,15 |
| **2**. + 3mmol DGEBA | | | | | | |
| **1**. 0,015mol Ukanol DOP in 0,015mol PE110 gelöst | **G2239** | --- | 10min150°C | 581 (DMF) | 832 | 7,15 |
| **2**. + 0,015mol DGEBA | | | | | | |

| | | | | | | |
|---|---|---|---|---|---|---|
| **Katalysatoren:** DMAPA : 3-Dimethylamino-1-propylamin TPP : Triphenylphosphin | | | | | | |

In einer bevorzugten Ausführungsform umfasst das erfindungsgemäße Prepolymer ferner noch eine Zähmodifikatorkomponente. Besonders bevorzugt ist der Zähmodifikator kovalent in das Prepolymer inkorporiert. Derartige Prepolymere werden durch gleichzeitige oder stufenweise Umsetzung aller drei Komponenten (Harz, Phosphinsäurederivat und Zähmodifikator), gegebenenfalls in Gegenwart eines Katalysators wie z.B. oben angegeben, erhalten. Als Zähmodifikatoren eignen sich beispielsweise Fest-Kautschuke und Flüssig-Kautschuke, Core-Shell-Partikel (z.b. Genioperl® der Firma Wacker), thermoplastische Silikonelastomere (z.B. Geniomer® von Wacker), Elastomere sowie Siloxane und Polyether mit funktionellen Gruppen, die mit dem Harz und/oder dem Phosphinsäurederivat reagieren können. Als Zähmodifikatoren können auch Nanopartikel eingesetzt werden. Die Zähmodifikatoren können sowohl einzeln als auch in Kombination eingesetzt werden. Einige geeignete Zähmodifikator-Anteile für spezielle Prepolymere sind in der Tabelle 3 angegeben, können jedoch nach Bedarf vom Fachmann unschwer variiert werden, um eine bestimmte Zähigkeit einzustellen.

Ferner wurde überrascherweise festgestellt, dass auch eine Umsetzung der obengenannten Zähmodikatoren mit den Phosphinsäurederivaten der Formel I ohne Harz möglich ist und diese Prepolymere mit lediglich zwei Komponenten ebenfalls vorteilhafte und technisch interessante Eigenschaften aufweisen.

Die erfindungsgemäßen Prepolymere (mit oder ohne Zähmodifikator) haben typischerweise ein durch GPC bestimmtes mittleres Molekulargewicht Mn im Bereich von 200 - 10000 und ein mittleres Molekulargewicht Mw im Bereich von 400 - 30.000.
Vorzugsweise liegt das mittlere Molekulargewicht Mn im Bereich von 300 - 5000 und das mittlere Molekulargewicht Mw im Bereich von 500 - 15.000.

Der Phosphorgehalt der Prepolymere liegt typischerweise im Bereich von 2-18 %, häufiger im Bereich von 4-8 %. Die Möglichkeit, in den erfindungsgemäßen Prepolymeren einen hohen Phosphorgehalt zu erreichen, vergrößert die Einsatzbreite der Prepolymere, da auf diese Weise Masterbatches herstellbar sind.

Tabelle 3 fasst die Reaktionsbedingungen zur Herstellung einer Reihe von Prepolymeren, von den die meisten eine Kautschukkomponente enthalten, und deren charakteristische Eigenschaften (z.B. Mn, Mw, P-Gehalt) zusammen.

**Tabelle 3 : Prepolymere**

| **Prepolymer** | | | | **Reakt.- Bedingungen** (Badtemp.) | **GPC** (THF) | | **P** |
|---|---|---|---|---|---|---|---|
| **Syntheseschritte** | Kautschuk- gehalt des Prepolymers | **Ansatz-Nr.** | Katalysator | | **Mn** | **Mw** | **%** |
| | | | | | | | |
| **1.** 10mmol DOPOFORM in 10mmol MY510 lösen | 15% | **G2211/1** | DMAPA (5 mol% v.EP) | 1h 170°C | 298 | 2150 | 4,66 |
| **2.** + CTBN×13 | 10% | **G2211/2** | | 30min 170°C | 348 | 593 | 5,05 |
| **1**. CTBN×13 in 10mmol R16 lösen | 15% | **G2211/4** | | 1h 170°C | 300 | 3830 | 4,49 |
| **2**. + 10mmol DOPOFORM portionsw. | | | | | | | |
| **1.** 5mmol DOPOFORM in CTBNx13 lösen 5mmol DOPOFORM in 10 mmol MY510 lösen | 15% | **G2219/1** | DMAPA (5 mol% v.EP) | 1h 150°C | | | 4,66 |
| **2.** EP-Harz-Lsg. In CTBN-Lsg.getropft | | **G2219/2** | | | | | 4,42 |
| POLYPOX R16 statt MY510 | | | | | | | |
| **1**. ETBN (10mmol POLYPOX R16 + 0,57mmol CTBNx13 +TPP) + 5mmol DOPOFORM | 15% | **G2223/A** | DMAPA (5 mol% v.EP) | **1**.4h 90°C | 370 | 2740 | 4,58 |
| | | **G2223/B** | (TPP 5 mol% v.EP) | **2.** 45min 170°C | 432 | 3700 | 4,58 |
| **1**. CTBNx13 in 10mol DGEBA gelöst | 15% | **G2224/1** | DMAPA (5mol%v.EP) | 40min 170°C | 515 | 2280 | 4,3 |
| **2**. + 10mmol DOPOFORM | | | | | | | |
| **1**. CTBN×13 in 10mol DGEBF gelöst | | **G2224/2** | | | 470 | 2520 | 4,7 |
| **2**.+10mmol DOPOFORM | | | | | | | |
| **1**. CTBN×13 in 10mol R12 gelöst | | **G2224/3** | | | 517 | 3620 | 4,95 |
| **2**. + 10mmol DOPOFORM | | | | | | | |
| **1**. CTBN×13 in 10mol R20 gelöst | | **G2224/4** | | | 460 | 2830 | 4,95 |
| **2**. + 10mmol DOPOFORM | | | | | | | |
| **1**. CTBN×13 in 10mol DGEBA gelöst | 15% | **G2225/1** | TPP (5 mol% v.EP) | 1,5h 170°C | 402 | 2070 | 7,2 |
| **2**. + 10mmol DOPOFORM portionsw. | | | | | | | |
| R12 statt DGEBA | | **G2225/2** | | | 375 | 2710 | 6,26 |
| R16 statt DGEBA | | **G2225/3** | | | 390 | 2850 | 6,26 |
| CY179 statt DGEBA | | **G2225/4** | | | 311 | 2030 | 5,8 |
| **1**. ETBN (5mmol DGEBA + CTBN×13 +TPP) | 15% | **G2226/1** | DMAPA (5 mol% v.EP) | 1,5h 170°C | --- | --- | 5,91 |
| **2**.+5mmol DOPOFORM | | **G2226/W** | | 3h 120°C 1h 140°C | 477 | 1150 | |
| **1**. CTBNx13 in 10mol DGEBA gelöst | 15% | **G2227/1** | PE110 (5 mol% v. EP) | 1h 170°C | 479 | 2510 | 4,73 |
| **2**.+10mmol DOPOFORM portionsw. | | | | | | | |
| DGEBF Statt DGEBA | | **G2227/2** | | | 420 | 2300 | 5,16 |
| **1**. CTBNx13 in 10mol DGEBA gelöst | 15% | **G2230/1** | DMAPA (5 mol% v.EP) | 45min 170°C | 436 | 955 | 4,3 |
| | | **G2230/2** | | 2h 170°C | 502 | 1130 | 4,3 |
| | | **G2230/3** | DMAPA (10 mol% v.EP) | 45min 170°C | 496 | 1280 | 4,3 |
| **2**.+10mmol DOPOFORM portionsw. | | **G2230/4** | DMAPA, PE110 (je 5 mol% v. EP) | 2x45min 170°C | 551 | 1380 | 4,73 |
| | | **G2230/5** | DMAPA, DCC (je 5 mol% v. EP) | 45min 170°C | 500 | 1290 | 4,3 |
| **1.** CTBNx13 in 10mol DGEBA gelöst | 15% | **G2231/1** | DMAPA(20 mol% v.EP) | 2h 170°C | | | 4,13 |
| **2**. **2**. + 10mmol DOPOFORM portionsw. | | **G2231/2** | DMAPA (5mol% v.EP) | 2x1h 170°C | 623 | 1690 | 537 |
| | | | PE110 (15 mol% v.EP) | | | | |
| **1**. 10 mmol DOPOFORM in 3mmol PE110 gelöst **2** + | 15% | **G2234/1** | DMAPA (20 mol% v. EP) | 1h40min 170°C | 797 (DMF) | 11860 | 5,37 |
| 10mmol DGEBA, + CTBNx13 | | | | | | | |
| **1**. 0,1mol DGEBA in CTBNx13 gelöst | 15% | **G2236** | DMAPA (5 mol% v.EP) | 2h170°C | 564 | 1360 | 4,3 |
| **2**.+0,1molDOPOFORM | | | | | | | |
| **1**. 0,1mol DOPOFORM in 0,03 mol PE110 gelöst | 15% | **G2238** | DMAPA (5 mol% v.EP) | 2h170°C | 565 | 1890 | 5,3 |
| **2**. + 0,1molDGEBA und CTBNx13 | | | | | | | |
| **1**. 0,05mol DOPOFORM in 0,05 mol PE110 gelöst | 15% | **G2243/W** | --- | 30min 170°C ->130°C | 362 | 433 | 3,67 |
| **2**. +0,16molDGEBA und CTBNx13 | | | | | | | |
| **1**. NIPOL1472X in 0,05mol DGEBA | 5% | **G2247** | DMAPA (5 mol% v.EP) | 2h170°C | | | 4,7 |
| gelöst **2** + 0,05mol DOPOFORM | | | | | | | |
| **1**. 0,05mol DGEBA in CTBNx13 gelöst | 15% | **G2248** | DMAPA (5 mol% v.EP) | 2h170°C | | | 4,52 |
| **2.**+0,05mol Ukanol DOP | | | | | | | |
| **1**. 0,04mol DGEBA in CTBNx13 gelöst | 15% | **G2251** | DMAPA (5 mol% v.EP) | 2h170°C | | | 4,3 |
| **2**. + 0,04mol DOPOFORM | | | | | | | |
| **1**. NIPOL1472X in 0,05mol DGEBA gelöst | 5% | **G2252** | DMAPA (5 mol% v.EP) | 2h170°C | | | 4.7 |
| **2**. + 0,05mo1 DOPOFORM | | | | | | | |

Die erfindungsgemäß hergestellten Prepolymere enthalten überraschenderweise in der Regel keine Monomerkomponenten mehr und sind damit wesentlich weniger toxisch und umweltfreundlicher als die bisher bekannten phosphinathaltigen Flammschutzmittel. Ausserdem eignen sich die Prepolymere für ein breites Spektrum von neuen Anwendungen (z.B. als Klebstoffe) und bekannten Anwendungen, z.B. Herstellung von Formkörpern, Laminaten, Prepregs und Beschichtungen, bei denen die erfindungsgemäßen Prepolymere zu Polymeren, insbesondere Duromeren, mit gewünschten Eigenschaften bezüglich Flammfestigkeit und Zähigkeit weiter verarbeitet werden.

Bei der erfindungsgemäßen Herstellung eines flammfesten Polymers wird allgemein ein erfindungsgemäßes Prepolymer oder eine Mischung solcher Prepolymere unter Reaktionsbedingungen umgesetzt, die zur weiteren Polymerisation führen.

Diese Umsetzung wird in der Regel in Gegenwart eines üblichen Härters erfolgen. Der Härter wird in Abhängigkeit von der chemischen Zusammensetzung des Prepolymers bzw. des herzustellenden flammfesten Polymers gewählt werden und geeignete Härter für ein breites Spektrum von Harzen sind dem Fachmann bekannt. Beispielsweise wird in der EP 0 799 847 eine Vielfalt von Härtern für Epoxidharze genannt. Für die Heißhärtung werden unter anderem verschiedene Novolak-Harze, z.B. Phenol-, Cresol-, Bisphenol-A-Novolake, Bortrifluorid-Komplexe, Säueanhydride, z.B. Hexahydrophthalsäuranhydrid, und aromatische Amine eingesetzt. Aliphatische Amine härten Epoxidharze bereits bei Raumtemperatur. Spezielle, nicht-beschränkende Beispiele für erfindungsgemäß geeignete Härter für Epoxidharze sind p-Xylendiamin und Triethylentetramin (kalthärtend) sowie Dicyandiamid und Diaminodiphenylsulfon (heißhärtend). Der Anteil des Härters kann in Abhängigkeit von der gewünschten Zusammensetzung und den gewünschten Eigenschaften des Duromers stark variieren.

Die Härtung kann beispielsweise durch thermische Härtung, UV-Härtung oder Elektronenstrahlhärtung erfolgen.

Vorzugsweise wird die Umsetzung auch in Gegenwart eines üblichen Katalysators oder Beschleunigers erfolgen. Der Katalysator wird in Abhängigkeit von der chemischen Zusammensetzung des Prepolymers bzw. des herzustellenden Polymerharzes gewählt werden und geeignete Katalysatoren für ein breites Spektrum von Harzen sind dem Fachmann bekannt.

Einige nicht-beschränkende Beispiele für erfindungsgemäß geeignete Katalysatoren für die Herstellung von Polymerharzen, die ein Epoxidharz enthalten, sind 3-Dimethylamino-1-propylamin (DMAPA), Triethanolamin, Benzyldimethylamin (BDMA), Imidazol und seine Derivate, z.B. 2-Methylimidazol, 2-Phenylimidazol, 2-Ethyl-4-methylimidazol, Diazabicycloundecan (DBU) und Triphenylphosphin (TPP).

In einer speziellen Ausführungform der Erfindung werden der Härter und/oder der Katalysator in verkapselter Form eingesetzt. Auf diese Weise kann der Zeitpunkt der Teilnahme des Härters und/oder Katalysators an der Umsetzung durch deren gezielte Freisetzung aus den Kapseln gesteuert werden. Das gleiche Prinzip kann gewünschtenfalls auch bei der Herstellung der Prepolymere angewandt werden.

Häufig wird die Umsetzung auch in Gegenwart eines Reaktivverdünners erfolgen, der in das Polymer inkorporiert wird. Solche Reaktiverdünner für ein Spektrum von Harzen sind im Stand der Technik bekannt. Für Harze auf Epoxidbasis handelt es sich dabei typischerweise um mono- bis pentaepoxyfunktionelle aliphatische, cycloaliphatische oder aromatische Verbindungen. Geeignete, nicht beschränkende Beispiele für solche Reaktivverdünner sind Bis(3-glycidyloxypropyl)tetramethyldisiloxan, Triglycidyl-p-aminophenol, Cyclohexandimethanoldiglycidether, Glycerintriglycidether, Neopentylglykoldiglycidether, Pentaerythrittetraglycidether, Polypropylenglykoldiglycidether und Trimethylolpropantriglycidether.

Der Phosphorgehalt der flammfesten Polymeren liegt typischerweise im Bereich von 1-5 %, bevorzugt im Bereich von 1-3 %. Ein derartig geringer Phosphorgehalt reicht in der Regel aus, um dem Polymer eine ausreichende Flammfestigkeit zu verleihen.

Tabelle 4 fasst die Reaktionsbedingungen zur Herstellung von verschiedenen Duromeren und deren charakteristische Eigenschaften (z.B. MARHE-Wert, UL94, Tg, P-Gehalt) zusammen.

**Tabelle 4 : Duromere**

| **Nr.** | **Prepolymer** | **Härter** | **Härtung** | **K_1C** | **UL94** | **Tg (°C)** | **P** % | **MARHE** (bei 50kW/m²) kW/m² |
|---|---|---|---|---|---|---|---|---|
| | | | | MN/m3/2 | | DMA | | |
| **G2235** | | 6 Masseteile Dicyandiamid 2 Masseteile UR300 (Beschleuniger) | 90°C 16h bis 2h 160°C | 0,73 | | 130 | 2,46 | |
| | 0,1mol DOPOFORM | | | | | | | |
| | 0,269 molDGEBA | | | | | | | |
| **G2236** | | 6 Masseteile Dicyandiamid 2 Masseteile UR300 (Be- schleuniger) | 90°C 16h bis 2h 160°C bis 2h | 0,95 | | 127 | 2,15 | |
| | 0,1mol DOPOFORM | | | | | | | |
| | 0,294 mol DGEBA | | | | | | | |
| | 7,5% CTBNx13 | | | | | | | |
| **G2237** | | 6 Masseteile Dicyandiamid 2 Masseteile UR300 (Beschleuniger) | 90°C 16h bis 2h 160°C | 0,61 | | 130 | 3,01 | |
| | 0,1 mol DOPOFORM | | | | | | | |
| | 0,03 mol PE110 | | | | | | | |
| | 0,279 mol DGEBA | | | | | | | |
| **G2238** | 0,1 mol DOPOFORM | 6 Masseteile Dicyandiamid 2 Masseteile UR300 (Beschleuniger) | 90°C 16h bis 2h 160°C | 0,84 | VO | 124 | 2,65 | |
| | 003 mol PE110 | | | | | | | |
| | 0,304 mol DGEBA | | | | | | | |
| | 7,5% CTBNx13 | | | | | | | |
| **G2242** | | 6 Masseteile Dicyandiamid 2 Masseteile UR300 (Beschleuniger) | 90°C 16h bis 2h 160°C | 0,6 | VO | 124 | 4,12 | |
| | 0,05 mol DOPOFORM | | | | | | | |
| | 0,05 mol PE110 | | | | | | | |
| | 0,151 molDGEBA | | | | | | | |
| **G2243/W** | 0,05 mol DOPOFORM | 6 Masseteile Dicyandiamid 2 Masseteile UR300 (Beschleuniger) | 90°C 16h 90°C 16h bis 2h 160°C | 0,8 | VO | 122 | 3,67 | |
| | 0,05 mol PE1 10 | | | | | | | |
| | 0,16 moIDGEBA | | | | | | | |
| | 7,5% CTBNx13 | | | | | | | |
| **G2246/1** | 0,1mol DOPOFORM | Diaminodi- phenylsulfon EP:NH = 1:1 | 110°C 6h 4h 120°C bis 1h 180°C | 0,53 | VO | 153 | 2,46 | 222 |
| | 0,269 molDGEBA 0,269 molDGEBA | | | | | | | |
| **G2246/2** | 0,1mol DOPOFORM | Diaminodiphenylsulfon EP:NH = 1:1 | 110°C 6h 4h 120°C bis 1h 180°C | 0,92 | V1 | 153 | 2,15 | 277 |
| | 0,294 mol DGEBA | | | | | | | |
| | 7,5% CTBNx13 | | | | | | | |
| **G2247** | 0,05 mol DOPOFORM | Diaminodi- phenylsulfon EP:NH = 1:1 | 110°C 5h 3h 120°C bis 1h 180°C | 0,8 | VO | 156 | 2,35 | 238 |
| | 0,1375 mol DGEBA | | | | | | | |
| | 2,5% NIPOL1472X | | | | | | | |

Sowohl die Prepolymere als auch die damit hergestellten Polymere können weitere Additive und/oder Füllstoffe enthalten, die bestimmte Eigenschaften des Prepolymers bzw. der Polymere verbessern. Solche Additive können z.B. Ammoniumpolyphosphat oder Aluminiumtrihydroxid und/oder beispielsweise Mikro- oder Nanopartikel aus anorganischen Materialien, wie etwa Oxide (z.B. SiO₂, TiO₂, Al₂O₃, ZrO₂), Carbide (z.B. SiC), Nitride (z.B. BN), Carbonnanotubes etc. sein.

Die folgenden Beispiele dienen zur näheren Erläuterung der Erfindung, ohne diese jedoch darauf zu beschränken.

### Beispiel 1

### G2211/1: Prepolymer aus DOPOFORM, Triglycidyl-p-aminophenol(TGPAP/Araldite MY 0510) und Kautschuk(Hycar 1300x13)

In einem 25 ml-Becherglas im Ölbad (170°C) werden 10 mmol DOPOFORM in 10 mmol TGPAP unter Rühren gelöst, man erhält eine klare Mischung, 0, 974 g (15 %) Kautschuk werden dazugewogen und unter Rühren vermischt, die Mischung ist trübe. Man rührt noch 1 h weiter, die Mischung bleibt trübe.

Die Mischung wird aus dem Bad genommen. Ist sie auf 125°C abgekühlt, werden 1,5 mmol 3-Dimethylamino-1-propylamin unter kräftigem Rühren dazugegeben. Nach dem Abklingen der exothermen Reaktion (Temperaturerhöhung im Reaktionsgefäß auf 142°C) erwärmt man weiter im Ölbad (170°C) für 1 h. Das Produkt ist trübe, hochviskos und bei Raumtemperatur hart und spröde.

### Beispiel 2

### G2211/2: Prepolymer aus DOPOFORM, Triglycidyl-p-aminophenol(TGPAP/Araldite MY 0510) und Kautschuk(Hycar 1300x13)

In einem 25 ml-Becherglas im Ölbad (170°C) werden 10 mmol DOPOFORM in 10 mmol TGPAP unter Rühren gelöst, man erhält eine klare Mischung, 0,614 g (10 %) Kautschuk werden dazugewogen und unter Rühren vermischt, die Mischung ist etwas trübe. Man rührt noch 1 h weiter, die Mischung bleibt trübe.

Die Mischung wird aus dem Bad genommen. Ist sie auf 125°C abgekühlt, werden 1,5 mmol 3-Dimethylamino-1-propylamin unter kräftigem Rühren dazugegeben. Nach dem Abklingen der exothermen Reaktion (Temperaturerhöhung im Reaktionsgefäß auf 142°C) erwärmt man weiter im Ölbad (170°C) für 1 h. Das Produkt ist trübe, hochviskos und bei Raumtemperatur hart und spröde.

### Beispiel 3

### G2211/4: Prepolymer aus DOPOFORM, Pentaerythrittetraglycidether(POLYPOX R16) und Kautschuk (Hycar 1300x13)

In einem 25 ml-Becherglas im Ölbad (170°C) werden 0,894 g (15 %) Kautschuk in 5 mmol R16 unter Rühren gelöst, man erhält eine klare Mischung. 10 mmol DOPOFORM werden portionsweise dazugegeben und gelöst. Am Ende der Zugabe wird das Gemisch etwas trübe.

Die Mischung wird aus dem Bad genommen. Ist sie auf 135°C abgekühlt, werden 1 mmol 3-Dimethylamino-1-propylamin unter kräftigem Rühren dazugegeben, dabei verstärkt sich die Trübung. Man erwärmt weiter im Ölbad (160°C) für 1 h. Das Produkt ist trübe, dickflüssig und bei Raumtemperatur noch etwas klebrig.

### Beispiel 4

### G2223/4: Prepolymer aus Pentaerythrittetraglycidether (POLYPOX R16) und Kautschuk (Hycar 1300x13), weitere Umsetzung mit DOPOFORM

In einem 25 ml-Rundkolben werden 2,5 mmol R16 und 0,447 g (15 %) 0,142 mmol Kautschuk vorgelegt. Unter Stickstoff und Rühren erwärmt man im Ölbad (90°C) bis man eine klare Mischung erhält. 0,0071 mmol Triphenylphosphin (5 mol% vom Kautschuk) werden als Katalysator dazugegeben und das Reaktionsgemisch wird 4 h weiter erwärmt.

Die Badtemperatur wird auf 170°C erhöht und dann 5 mmol DOPOFORM dazugegeben, man erhält eine klare Mischung.

Die Mischung wird aus dem Bad genommen. Ist sie auf 145°C abgekühlt, werden 0,5 mmol Triphenylphosphin unter kräftigem Rühren dazugegeben. Es wird für 45 min. weiter im Ölbad erwärmt. Das Produkt ist viskos und bei Raumtemperatur fest und trübe.

### Beispiel 5

### G2224/1: Prepolymer aus DOPOFORM, Bisphenol-A-diglycidether(DGEBA) und Kautschuk(Hycar 1300x13)

In einem 25 ml-Becherglas im Ölbad (170°C) werden 0,926 g (15%) Kautschuk in 10 mmol DGEBA unter Rühren gelöst, man erhält eine klare Mischung. 10 mmol DOPOFORM werden portionsweise dazugegeben und gelöst. Das Gemisch bleibt klar. Die Mischung wird aus dem Bad genommen. Ist sie auf 107°C abgekühlt, werden 1 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 117°C) erwärmt man weiter im Ölbad (170°C) für 40 min. Das Produkt ist trübe, viskos und bei Raumtemperatur brüchig.

### Beispiel 6

### G2224/2: Prepolymer aus DOPOFORM, Bisphenol-F-diglycidether(DGEBF) und Kautschuk(Hycar 1300x13)

In einem 25 ml-Becherglas im Ölbad (170°C) werden 0,842 g (15%) Kautschuk in 10 mmol DGEBF unter Rühren gelöst, man erhält eine klare Mischung. 10 mmol DOPOFORM werden portionsweise dazugegeben und gelöst. Das Gemisch bleibt klar. Die Mischung wird aus dem Bad genommen. Ist sie auf 107°C abgekühlt, werden 1 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 135°C) erwärmt man weiter im Ölbad (170°C) für 40 min. Das Produkt ist trübe, viskos und bei Raumtemperatur brüchig.

### Beispiel 7

### G2226/W: Prepolymer aus Bisphenol-A-diglycidether(DGEBA) und Kautschuk(Hycar 1300x13), weitere Umsetzung mit DOPOFORM

In einem 25 ml-Rundkolben werden 5 mmol DGEBA und 0,463 g (15%), 0, 147 mmol Kautschuk vorgelegt. Unter Stickstoff und Rühren erwärmt man im Ölbad (90°C), bis man eine klare Mischung erhält. 0,01143 mmol Triphenylphosphin (6,6 mol% vom Kautschuk) werden als Katalysator dazugegeben und das Reaktionsgemisch 4 h weiter erwärmt.

Die Badtemperatur wird auf 170 °C erhöht und dann 5 mmol DOPOFORM dazugegeben, man erhält eine klare Mischung. Die Mischung wird aus dem Bad genommen. Ist sie auf 130°C abgekühlt, werden 0,5 mmol 3-Dimethylamino-1-propylamin unter kräftigem Rühren dazugegeben, dabei wird das Gemisch trübe. Man erwärmt weiter im Ölbad (120°C) für 3 h und bei 140°C für 1 h. Das Produkt ist trübe, viskos und bei Raumtemperatur fest.

### Beispiel 8

### G2230/3: Prepolymer aus DOPOFORM, Bisphenol-A-diglycidether(DGEBA) und Kautschuk(Hycar 1300x13)

In einem 25 ml-Becherglas im Ölbad (170°C) werden 0,926 g (15%) Kautschuk in 10 mmol DGEBA unter Rühren gelöst, man erhält eine klare Mischung. 10 mmol DOPOFORM werden portionsweise dazugegeben und gelöst. Das Gemisch bleibt klar. Die Mischung wird aus dem Bad genommen. Ist sie auf 128°C abgekühlt, werden 2 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 148°C) erwärmt man weiter im Ölbad (170°C) für 40 min. Das Produkt ist trübe, viskos und bei Raumtemperatur hart und brüchig.

### Beispiel 9

### G2230/4: Prepolymer aus DOPOFORM, Bisphenol-A-diglycidether(DGEBA) und Kautschuk(Hycar 1300x13)

In einem 25 ml-Becherglas im Ölbad (170°C) werden 0,926 g (15%) Kautschuk in 10 mmol DGEBA unter Rühren gelöst, man erhält eine klare Mischung. 10 mmol DOPOFORM werden portionsweise dazugegeben und gelöst. Das Gemisch bleibt klar. Die Mischung wird aus dem Bad genommen. Ist sie auf 131°C abgekühlt, werden 1 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 136°C) erwärmt man weiter im Ölbad (170°C) für 50 min. Es werden 1 mmol EXOLIT PE110 dazugegeben und weitere 50 min erwärmt. Das Produkt ist trübe, hochviskos und bei Raumtemperatur hart und brüchig.

### Beispiel 10

### G2231/4: Prepolymer aus DOPOFORM, Bisphenol-A-diglycidether (DGEBA)

In einem 25 ml-Becherglas im Ölbad (170°C) werden 10 mmol DOPOFORM in 10 mmol DGEBA unter Rühren gelöst, man erhält eine klare Mischung.

Die Mischung wird aus dem Bad genommen. Ist sie auf 126°C abgekühlt, werden 1 mmol 3-Dimethylamino-1-propylamin unter kräftigem Rühren dazugegeben. Nach dem Abklingen der exothermen Reaktion (Temperaturerhöhung im Reaktionsgefäß auf 138°C) erwärmt man weiter im Ölbad (170°C) für 1 h. Es werden 3 mmol EXOLIT PE110 dazugegeben (Temperaturanstieg auf 178°C) und weiter 1 h erwärmt. Das Produkt ist klar, dickflüssig und bei Raumtemperatur hart und brüchig.

### Beispiel 11

### G2243/W:

### A - Prepolymer aus DOPOFORM, EXOLIT PE110, Bisphenol-A-diglycidether(DGEBA) und Kautschuk(Hycar 1300x13)

In einem 100 ml-Becherglas im Ölbad (170°C) werden 0,05 mol DOPOFORM und 0,05 mol PE110 vermischt, man erhält eine klare Mischung. 0,327 mol DGEBA und 4,34 g Kautschuk werden dazugewogen und verrührt. Man erhält eine klare Mischung und es wird 30 min weiter erwärmt.

### B - Duromerherstellung (Härtung mit Dicyandiamid)

Die Mischung wird aus dem Bad genommen und 10 min entgast. Im Ölbad (150°C) werden 5,065 g (6GT) Dicyandiamid und 1,688 g (2GT) Beschleuniger UR 300 dazugegeben und mit einem Holzstab eingerührt. Anschließend wird noch 5 min mit einem Ultraschallrüssel homogenisiert. Das heiße Gemisch gießt man sofort in eine auf 90°C vorgewärmte Gussform und stellt diese in einen Umluftwärmeschrank. Es wird dann bei folgendem Temperaturprogramm ausgehärtet:

| | | |
|---|---|---|
| | 90°C | 15 h |
| | 110°C | 1,5 h |
| 110-> | 120°C | 30 min |
| | 120°C | 1 h |
| 120-> | 140°C | 30 min |
| | 140°C | 1 h |
| 140-> | 160°C | 30 min |
| | 160°C | ? h |

Das Duromer ist goldgelb und getrübt.

### Beispiel 12

### G2246/2:

### A - Prepolymer aus DOPOFORM, Bisphenol-A-diglycidether(DGEBA) und Kautschuk(Hycar 1300x13)

In einem 100 ml-Becherglas im Ölbad (170°C) werden 9,26 g (15 %) Kautschuk in 0,05 mol DGEBA unter Rühren gelöst, man erhält eine klare Mischung. 0,05 mol DOPOFORM werden portionsweise dazugegeben und gelöst. Das Gemisch bleibt klar. Die Mischung wird aus dem Bad genommen. Ist sie auf 127°C abgekühlt, werden 5 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 137°C) erwärmt man weiter im Ölbad (170°C) für 2 h. Das Produkt ist trübe und hochviskos, bei RT hart und spröde.

### B - Duromerherstellung (Härtung mit Diaminodiphenylsulfon)

Das Prepolymer wird im Ölbad (140°C) mit 31,6 g (50% der Gesamtmischung) DGEBA vermischt (die Mischung ist klar) und 10 min entgast. 18,22 g Diaminodiphenylsulfon gibt man portionsweise in 12 min zu und entgast nochmals für 5 min.
Das heiße Gemisch gießt man sofort in eine auf 110°C vorgewärmte Gussform und stellt diese in einen Umluftwärmeschrank. Es wird dann bei folgendem Temperaturprogramm ausgehärtet:

| | | |
|---|---|---|
| | 110°C | 5 h |
| 110-> | 120°C | 30 min |
| | 120°C | 4 h |
| 120-> | 140°C | 30 min |
| | 160°C | 1 h |
| 160-> | 180°C | 30 min |
| | 180°C | 1 h |

Das Duromer ist goldgelb und milchig.

### Beispiel 13

### G2247:

### A - Prepolymer aus DOPOFORM, Bisphenol-A-diglycidether(DGEBA) und Kautschuk(Nipol 1472X))

In einem 100 ml-Becherglas werden 1,544 g (5 %) Kautschuk in 1,6 g Methylethylketon (MEK) gelöst und mit 0,05 mol DGEBA unter Rühren gemischt, man erhält eine nicht ganz klare Mischung. Im Ölbad (170°C) wird das Lösungsmittel 5 min verkocht, anschießend 5 min entgast. 0,05 mmol DOPOFORM werden portionsweise dazugegeben und gelöst. Das Gemisch bleibt fast klar.

Die Mischung wird aus dem Bad genommen. Ist sie auf 120°C abgekühlt, werden 5 mmol 3-Dimethylamino-1-propylamin unter kräftigem Rühren dazugegeben, dabei wird die Mischung trübe. Nach dem Abklingen der exothermen Reaktion (Temperaturerhöhung im Reaktionsgefäß auf 130°C) erwärmt man weiter im Ölbad (170°C) für 2 h. Das Produkt ist trübe und viskos.

### B - Duromerherstellung (Härtung mit Diaminodiphenylsulfon)

Das noch heiße Prepolymer wird im Ölbad (150°C) mit 32,55 g (50% der Gesamtmischung) DGEBA vermischt (die Mischung ist fast klar) und 12 min entgast. 13,97 g Diaminodiphenylsulfon gibt man portionsweise in 12 min zu, und entgast nochmals für 5 min. Das heiße Gemisch gießt man sofort in eine auf 110°C vorgewärmte Gussform und stellt diese in einen Umluftwärmeschrank. Es wird dann bei folgendem Temperaturprogramm ausgehärtet:

| | | |
|---|---|---|
| | 110°C | 5 h |
| 110-> | 120°C | 30 min |
| | 160°C | 1 h |
| 160-> | 180°C | 30 min |
| | 180°C | 1 h |

Das Duromer ist goldgelb und milchig.

### Beispiel 13a

### G2235:

### A - Prepolymer aus DOPOFORM, Bisphenol-A-diglycidether(DGEBA)

In einem 150 ml-Becherglas im Ölbad (170°C) werden 0,05 mol DOPOFORM in 0,05 mol DGEBA unter Rühren gelöst, man erhält eine klare Mischung.

Die Mischung wird aus dem Bad genommen. Ist sie auf 124°C abgekühlt, werden 0,005 mol 3-Dimethylamino-1-propylamin unter kräftigem Rühren dazugegeben. Nach dem Abklingen der exothermen Reaktion (Temperaturerhöhung im Reaktionsgefäß auf 140°C) erwärmt man weiter im Ölbad (170°C) für 2 h. (Temperatur der Mischung 150-160°C). Anschließend wird 1 h entgast.

### B - Duromerherstellung (Härtung mit Dicyandiamid)

Das noch heiße Prepolymer wird im Ölbad (150°C) mit 31,4 g (50% der Gesamtmischung) DGEBA vermischt (die Mischung bleibt klar) und dann ca. 15 min entgast. Man lässt die Mischung auf 90°C abkühlen und rührt 3,705 g (6GT) DiCy und 1,235 g (2GT) UR 300 ein. Anschließend wird nochmals 5 min entgast. Das heiße trübe Gemisch gießt man sofort in eine auf 90°C vorgewärmte Gussform und stellt diese in einen Umluftwärmeschrank. Es wird dann bei folgendem Temperaturprogramm ausgehärtet:

| | | |
|---|---|---|
| | 90°C | 17 h |
| | 110°C | 1,5 h |
| 110-> | 120°C | 30 min |
| | 120°C | 1 h |
| 120-> | 140°C | 30 min |
| | 140°C | 1 h |
| | 140°C | 1 h |
| 140-> | 160°C | 30 min |
| | 160°C | 1 h |

Das Duromer ist goldgelb und getrübt.

### Beispiel 15

### G2236:

### A - Prepolymer aus DOPOFORM, Bisphenol-A-diglycidether(DGEBA) und Kautschuk(Hycar 1300x13)

In einem 150 ml-Becherglas im Ölbad (170°C) werden 4,63 g (15 %) Kautschuk in 0,05 mol DGEBA unter Rühren gelöst, man erhält eine klare Mischung. 0,05 mol DOPOFORM werden portionsweise dazugegeben und gelöst. Das Gemisch bleibt klar. Die Mischung wird aus dem Bad genommen. Ist sie auf 127°C abgekühlt, werden 5 mmol 3-Dimethylamino-1-propylamin unter kräftigem Rühren dazugegeben, dabei wird die Mischung etwas trübe. Nach dem Abklingen der exothermen Reaktion (Temperaturerhöhung im Reaktionsgefäß auf 137°C) erwärmt man weiter im Ölbad (170°C) für 2 h (Temperatur der Mischung 168-170°C). Das Produkt ist trübe und viskos und bei Raumtemperatur hart.

### B - Duromerherstellung (Härtung mit Dicyandiamid)

Das noch heiße Prepolymer wird im Ölbad (150°C) mit 36,0 g (50% der Gesamtmischung) DGEBA vermischt (die Mischung wird klar) und dann ca. 15 min entgast. Man lässt die Mischung auf 90°C abkühlen und rührt 4,321 g (6GT) DiCy und 1,440 g (2GT) UR 300 ein. Anschließend wird nochmals 5 min entgast. Das heiße trübe Gemisch gießt man sofort in eine auf 90°C vorgewärmte Gussform und stellt diese in einen Umluftwärmeschrank. Es wird dann bei folgendem Temperaturprogramm ausgehärtet:

| | | |
|---|---|---|
| | 90°C | 16 h |
| | 110°C | 1,5 h |
| 110-> | 120°C | 30 min |
| | 120°C | 1 h |
| 120-> | 140°C | 30 min |
| | 140°C | 1 h |
| 140-> | 160°C | 30 min |
| | 160°C | 1 h |

Das Duromer ist goldgelb und getrübt.

### Beispiel 16

### G2247:

### A - Prepolymer aus DOPOFORM, Bisphenol-A-diglycidether(DGEBA) und Kautschuk(Nipol 1472X)

In einem 150 ml-Becherglas werden in 3,088 g (entspricht 5 %) 50%iger Kautschuk-Lösung (in MEK) 0,05 mol DGEBA unter Rühren gelöst, man erhält eine fast klare Mischung. Im Ölbad (170°C) wird das Lösemittel 5 min verkocht und anschließend wird die Lösung noch 5 min entgast. 0,05 mol DOPOFORM werden portionsweise dazugegeben und gelöst. Das Gemisch ist nicht ganz klar. Die Mischung wird aus dem Bad genommen. Ist sie auf 120°C abgekühlt, werden 5 mmol 3-Dimethylamino-1-propylamin unter kräftigem Rühren dazugegeben, dabei wird die Mischung trübe. Nach dem Abklingen der exothermen Reaktion (Temperaturerhöhung im Reaktionsgefäß auf 130°C) erwärmt man weiter im Ölbad (170°C) für 2 h (Temperatur der Mischung 165-170°C).

### B - Duromerherstellung (Härtung mit Diaminodiphenylsulfon)

Das noch heiße Prepolymer wird im Ölbad (150°C) mit 32,55 g (50% der Gesamtmischung) DGEBA vermischt (die Mischung wird fast klar) und dann ca. 12 min entgast. Man rührt 13,967 g DDS (0,225 eq NH) portionsweise ein (Temperatur der Mischung 140°C). Anschließend wird noch mal 5 min entgast. Das heiße Gemisch gießt man sofort in eine auf 110°C vorgewärmte Gussform und stellt diese in einen Umluftwärmeschrank. Es wird dann bei folgendem Temperaturprogramm ausgehärtet:

| | | |
|---|---|---|
| | 110°C | 5 h |
| 110-> | 120°C | 30 min |
| | 120°C | 3 h |
| 120-> | 140°C | 30 min |
| | 140°C | 1 h |
| 140-> | 160°C | 30 min |
| | 160°C | 1 h |
| 160-> | 180°C | 30 min |
| | 180°C | 1 h |

Das Duromer ist goldgelb und milchig.

### Beispiel 17

### Formulierung von Reparaturharzen

Aus verschiedenen Epoxidharzmischungen zur Verwendung als Reparaturharze wurden Platten, Laminate und Prepregs hergestellt und deren Eigenschaften untersucht. Dabei wurde TETA (Triethylentetramin) als Härter und DMAPA (3-Dimethyl-amino-1-propylamin) als Katalysator (Beschleuniger) (5 mol% der EP-Gruppen) verwendet.

### Herstellung der Harzmischung

DOPO-EP6 wurde im Verhältnis 1:3 in Verdünner Polypox R16 im Ölbad (150°C) gelöst und 30 min zum Entgasen evakuiert. Das klare Gemisch wurde mit Eiswasser auf 15-20°C abgekühlt. Härter (Verhältnis EP-Mischung:Härter 1:1) und Beschleuniger wurden dazugegeben und gründlich verrührt, dabei weiter gekühlt. Die Mischung sollte immer wieder umgerührt und im Eiswasser belassen werden. Die Verarbeitungszeit betrug ca. 30 min.

### Platte

Die Harzmischung wurde in eine stehende, oben offene Aluminium-Gussform (BxHxT /16x9x0,6 cm) gegossen und bei RT ca. 24 h gehärtet.

### Laminat

9 Streifen Glasfasergewebe (7781) 2x13 cm wurden zugeschnitten. Der erste Streifen wurde auf eine Trennfolie gelegt und mit der Harzmischung bestrichen. Dann wurde der zweite Streifen aufgelegt, leicht angedrückt und mit der Harzmischung bestrichen. Dieser Vorgang wurde mit den restlichen Streifen wiederholt. Auf den letzten Streifen wurde kein Harz mehr gegeben. Das Laminat wurde mit Trennfolie abgedeckt und bei RT ca. 24 h gehärtet.

### Prepreg

Ein Stück Glasfasergewebe (12x12 cm) wurde auf eine Trennfolie gelegt und mit der Harzmischung bestrichen, überschüssiges Harz wurde abgestreift. Das Prepreg wurde mit Trennfolie abgedeckt und bei RT 24 h gehärtet. P-Gehalt: 1,37 %

Der MARHE-Wert für das Prepreg (44 % Harzgehalt) betrug 20 kW/m², gemessen mit einem Cone-Kalorimeter bei 50 kW/m².
MARHE = maximale mittlere Wärmefreisetzungsrate, d.h.
Maximalwert des laufenden Mittelwerts der Wärmefreisetzungsrate nach Versuchsbeginn t=0
COₜₒₜₐₗ betrug 1 ppm; HRR_{total:} 70 kW/m²
COₜₒₜₐₗ = mittlere CO-Rauchgaskonzentration von t_{ignition} bis t_{FlameOut}
HRRₜₒₜₐₗ = mittlere Wärmefreisetzungsrate von t_{ignition} bis t_{FlameOut},
wobei t_{ignition} = Zeit bis zur Entzündung
t_{FlameOut} = Zeit bis zum Ende des effektiven Brandes

Die gemessenen Werte bestätigen eine gute Flammfestigkeit des Prepregs.

### Beispiel 18

Ein Harzmischung wurde analog zu Beispiel 17 hergestellt, mit dem Unterschied, dass DOPO-EP5 1:3 im gleichen Verdünner gelöst wurde und das Verhältnis der Epoxidharzmischung (DOPO-EP5 + Verdünner)zu Härter 2:1 betrug.

Die jweiligen Produkte (Platte, Laminat oder Prepreg) wurden 48 h lang bei RT gehärtet. Der P-Gehalt des Polymerharzes betrug 1,57 %.

Das Elastiziätsmodul des Laminats (47 % Harzgehalt) betrug 16500 MPa; K_{rc}: 0,7 MN/m²; max. Biegespannung: 385 MPa

Der MARHE-WERT des Prepregs betrug 31 kW/m²;
Coₜₒₜₐₗ betrug 16 ppm.

Die gemessenen Werte bestätigen eine gute Flammfestigkeit des Prepregs.

### Beispiel 19

### Herstellung einer Imprägniermischung:

### 1. Herstellung des P-haltigen Kautschuk-modifizierten Epoxy-Prepolymers DD1K1

Zur Herstellung des phosphorhaltigen Epoxy-Prepolymers DD1K1 werden DOPOFORM und DGEBA im Mol-Verhältnis 1 : 1 verwendet. Weiterhin werden DMAPA mit 5 mol%, bezogen auf die EpoxyGruppen von DGEBA, und CTBNx13 mit 10 ma% (Massenprozent), bezogen auf die Gesamtmasse von DOPOFORM, DGEBA und DMAPA, eingesetzt. DGEBA und CTBNx13 werden in einem Dreihalskolben mit Rührer (+Rührwerk), Innenthermometer und Tropftrichter eingewogen, auf 150°C erhitzt und durch Rühren vermischt. Anschließend wird die Mischung auf 170°c erwärmt und unter Rühren DOPOFORM zugegeben. Wenn sich eine klare Mischung gebildet hat, wird auf 150°C abgekühlt und langsam DMAPA zugetropft. Das Zutropfen sollte langsam erfolgen, da sich eine exotherme Reaktion einstellt. Nach erfolgter Zugabe wird wiederum auf 170°C erhitzt und eine Stunde gerührt. Zum Abkühlen wird die Mischung auf Aluminiumpapier ausgegossen.

### 2. Herstellung der Lösung für die Imprägnierung

Zur Herstellung der Imprägnierlösung werden das Cyanatharz PRIMASET PT15 (ein Produkt der Firma Lonza), DD1K1, Co(acac)₂ in TGPAP und Exolit OP 930 in den Massenverhältnissen von 57,7 : 31,7 : 1,08 : 9,5 verwendet. Die Massenprozente des Katalysators Co(acac)₂ in TGPAP teilen sich wiederum auf 40 ma% Co(acac)₂ und 60 ma% TGPAP auf.

Es werden die Substanzen PT15 und DD1K1 jeweils in MEK gelöst und nach vollständigem Lösen zusammengegeben. Co(acac)₂ wird 2h bei 80°C in TGPAP gelöst und anschließend mit dem Exolit zu der obigen Lösung gegeben. Danach wird mit einem Rührer (Rührwerk) gerührt bis eine homogen Mischung entstanden ist. Der Lösungsmittelanteil sollte ca. 40 ma% betragen.

Mit dieser Lösung wurden Imprägnierungen mit Glasfasergewebe vorgenommen. Die Imprägnierfähigkeit war sehr gut. Die Prepregs wiesen einen gleichmäßigen Harzauftrag ohne Agglomerationen auf. Nach 24 Stunden Lagerung bei Raumtemperatur war ein Tack von 2- festzustellen, der durch Aktivierung mit iso-Propanol auf Tack 2+ erhöht werden konnte. Es wurde eine 6-lagiges Laminat durch Pressung bei 135°C/30min hergestellt und die Aushärtung durch DMA unter Verwendung der 3-Punkt-Biege-Bank überprüft (1.Run = 157°C, 2.Run = 171°C). Weiterhin wurde ein Sandwich-Panel mit einem Honeycomb-Kern durch das Crushed-Core Verfahren bei einer Härtezeit von 30 min bei 135°C hergestellt. Es wies eine sehr gute Oberflächenqualität, einen Schälwert von 25,76 N und einen HRR-Wert von 190,6kW/m² (bei 50 kW/m² Wärmeeinstrahlung) auf.

## Patentansprüche

1. Prepolymer mit einem durch GPC bestimmten mittleren Molekulargewicht Mn im Bereich von 200 - 10.000 und einem mittleren Molekulargewicht Mw im Bereich von 400 - 30.000, erhalten durch Umsetzung eines Phosphinsäurederivats der folgenden Strukturformel 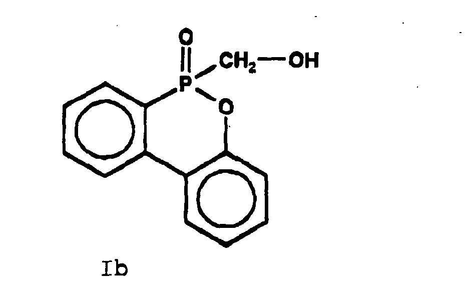 mit einem Epoxidharz.

2. Prepolymer nach Anspruch 1, **dadurch gekennzeichnet, dass** es noch mindestens einen Zähmodifikator umfasst, der aus der Gruppe aus Kautschuken, Core-Shell-Partikeln, thermoplastischen Silikonelastomeren, Elastomeren, Siloxanen, Polyethern und Nanopartikeln ausgewählt ist.

3. Prepolymer nach Anspruch 2, **dadurch gekennzeichnet, dass** der Zähmodifikator ein Kautschuk ist.

4. Prepolymer nach Anspruch 2, **dadurch gekennzeichnet, dass** der Zähmodikator kovalent in das Prepolymer inkorporiert ist.

5. Verwendung des Prepolymers nach einem der Ansprüche 1-4 zur Herstellung eines flammfesten Polymers.

6. Verwendung nach Anspruch 5, **dadurch gekennzeichnet, dass** es sich bei dem flammfesten Polymer um ein Duromer handelt.

7. Verwendung nach Anspruch 5 oder 6, **dadurch gekennzeichnet, dass** bei der Herstellung des flammfesten Polymers ein Härter eingesetzt wird.

8. Verwendung nach Anspruch 7, **dadurch gekennzeichnet, dass** als Härter p-Xylendiamin, Triethylentetramin, Dicyandiamid oder Diaminodiphenylsulfon eingesetzt wird.

9. Verwendung nach einem der Ansprüche 5-8, **dadurch gekennzeichnet, dass** bei der Herstellung des flammfesten Polymers ein Katalysator eingesetzt wird.

10. Verwendung nach Anspruch 9, **dadurch gekennzeichnet, dass** als Katalysator 3-Dimethylamino-1-propylamin (DMAPA), Triethanolamin, Benzyldimethylamin (BDMA), Triphenylphosphin (TPP), ein Imidazolderivat oder Diazabicycloundecan (DBU) eingesetzt wird.

11. Verwendung nach einem der Ansprüche 5-10, **dadurch gekennzeichnet, dass** der Härter und/oder der Katalysator in verkapselter Form eingesetzt werden und der Zeitpunkt der Teilnahme des Härters und/oder Katalysators an der Umsetzung durch deren gezielte Freisetzung aus den Kapseln gesteuert werden kann.

12. Verwendung nach einem der Ansprüche 5-11, **dadurch gekennzeichnet, dass** bei der Herstellung des flammfesten Polymers ein Reaktivverdünner eingesetzt wird.

13. Verwendung nach Anspruch 12, **dadurch gekennzeichnet, dass** als Reaktiverdünner eine Verbindung eingesetzt wird, die aus der Gruppe aus Bis(3-glycidyloxypropyl)-tetramethyldisiloxan, Triglycidyl-p-aminophenol, Cyclohexandimethanoldiglycidether, Glycerintriglycidether, Neopentylglykoldiglycidether, Pentaerythrittetraglycidether, Polypropylenglykoldiglycidether und Trimethylolpropantriglycidether ausgewählt ist.

14. Verwendung nach einem der Ansprüche 5-13, **dadurch gekennzeichnet**, das in das flammfeste Polymer weitere Additive und/oder Füllstoffe inkorporiert werden.

15. Verwendung nach einem der Ansprüche 5-14, **dadurch gekennzeichnet, dass** bei der Herstellung des flammfesten Polymers eine thermische Härtung, UV-Härtung oder Elektronenstrahlhärtung erfolgt.

16. Verwendung des Prepolymers nach einem der Ansprüche 1-4 oder einer dieses Prepolymer umfassenden Harz-zusammensetzung zur Herstellung eines Formkörpers, Laminats oder Prepregs oder einer Beschichtung, als Klebstoff oder Reparaturharz.

17. Flammfestes Polymer, hergestellt unter Verwendung eines Prepolymers nach einem der Ansprüche 1-4.

18. Flammfestes Polymer nach Anspruch 17, **dadurch gekennzeichnet, dass** es sich um ein Duromer handelt.

19. Flammfestes Polymer nach Anspruch 17 oder 18, **dadurch gekennzeichnet, dass** der Phosphorgehalt des Polymers unter 3 % liegt.

## Claims

1. A prepolymer with a GPC determined average molecular weight Mn in the range of 200 - 10,000 and an average molecular weight Mw in the range of 400 - 30,000, obtained by reacting a phosphinic acid derivative of the following structural formula 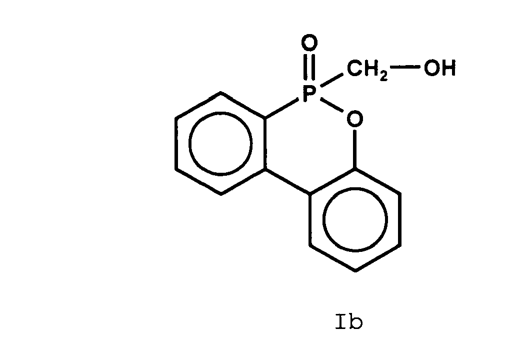 with an epoxy resin.

2. The prepolymer according to claim 1, **characterized in that** it also comprises at least one toughness modifier which is selected from the group consisting of rubbers, core-shell particles, thermoplastic silicone elastomers, elastomers, siloxanes, polyethers and nanoparticles.

3. The prepolymer according to claim 2, **characterized in that** the toughness modifier is a rubber.

4. The prepolymer according to claim 2, **characterized in that** the toughness modifier is covalently incorporated into the prepolymer.

5. The use of the prepolymer according to any one of claims 1-4 for producing a flame resistant polymer.

6. The use according to claim 5, **characterized in that** the flame resistant polymer is a duromer.

7. The use according to claim 5 or 6, **characterized in that** a curing agent is used in the production of the flame resistant polymer.

8. The use according to claim 7, **characterized in that** p-xylenediamine, triethylenetetramine, dicyandiamide or diaminodiphenyl sulfone is used as curing agent.

9. The use according to any one of claims 5-8, **characterized in that** a catalyst is used in the production of the flame resistant polymer.

10. The use according to claim 9, **characterized in that** 3-dimethylamino-1-propylamine (DMAPA), triethanolamine, benzyldimethylamine (BDMA), triphenylphosphine (TTP), an imidazole derivative or diazabicycloundecane (DBU) is used as catalyst.

11. The use according to any one of claims 5-10, **characterized in that** the curing agent and/or catalyst are used in encapsulated form and the point in time for the curing agent and/or catalyst to participate in the reaction is adjustable by controlled release thereof from the capsules.

12. The use according to any one of claims 5-11, **characterized in that** a reactive diluent is used in the production of the flame resistant polymer.

13. The use according to claim 12, **characterized in that** a compound selected from the group comprising bis(3-glycidyloxypropyl)tetramethyl disiloxane, triglycidyl-p-aminophenol, cyclohexanedimethanol diglycidyl ether, glycerin triglycidyl ether, neopentyl glycol diglycidyl ether, pentaerythritol tetraglycidyl ether, polypropylene glycol diglycidyl ether and trimethylolpropane triglycidyl ether is used as reactive diluent.

14. The use according to any one of claims 5-13, **characterized in that** further additives and/or fillers are incorporated into the flame resistant polymer.

15. The use according to any one of claims 5-14, **characterized in that** thermal curing, UV curing or electron beam curing is carried out in the production of the flame resistant polymer.

16. The use of the prepolymer according to any one of claims 1-4 or of a resin composition comprising said prepolymer for producing a moulded article, laminate or prepreg or a coating, or the use thereof as an adhesive or repair resin.

17. Flame resistant polymer, produced using a prepolymer according to any one of claims 1-4.

18. Flame resistant polymer according to claim 17, **characterized in that** it is a duromer.

19. Flame resistant polymer according to claim 17 or 18, **characterized in that** the phosphorous content of the polymer is less than 3 %.

## Revendications

1. Prépolymère ayant un poids moléculaire moyen Mn, déterminé par GPC, dans la plage allant de 200 à 10 000 et un poids moléculaire moyen Mw dans la plage allant de 400 à 30 000, obtenu par réaction d'un dérivé d'acide phosphinique de formule structurelle suivante : 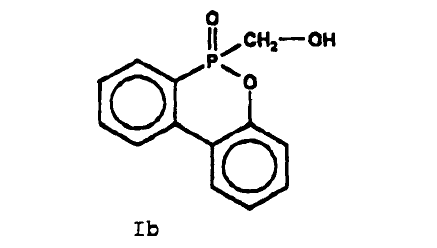 avec une résine époxyde.

2. Prépolymère selon la revendication 1, **caractérisé en ce qu'**il comprend encore au moins un régulateur de viscosité, qui est choisi dans le groupe constitué par les caoutchoucs, les particules noyau - enveloppe, les élastomères de silicone thermoplastiques, les élastomères, les siloxanes, les polyéthers et les nanoparticules.

3. Prépolymère selon la revendication 2, **caractérisé en ce que** le régulateur de viscosité est un caoutchouc.

4. Prépolymère selon la revendication 2, **caractérisé en ce que** le régulateur de viscosité est incorporé de manière covalente dans le prépolymère.

5. Utilisation du prépolymère selon l'une des revendications 1 à 4 pour la fabrication d'un polymère ignifuge.

6. Utilisation selon la revendication 5, **caractérisée en ce que** le polymère ignifuge est un duromère.

7. Utilisation selon la revendication 5 ou 6, **caractérisée en ce que** l'on utilise un durcisseur lors de la fabrication du polymère ignifuge.

8. Utilisation selon la revendication 7, **caractérisée en ce que** l'on met en oeuvre comme durcisseur de la p-xylènediamine, de la triéthylène-tétramine, du dicyanodiamide ou de la diaminodiphénylsulfone.

9. Utilisation selon l'une des revendications 5 à 8, **caractérisée en ce que** l'on utilise un catalyseur lors de la fabrication du polymère ignifuge.

10. Utilisation selon la revendication 9, **caractérisée en ce que** l'on met en oeuvre comme catalyseur de la 3-diméthylamino-1-propylamine (DMAPA), de la triéthanolamine, de la benzyldiméthylamine (BDMA), de la triphénylphosphine (TPP), un dérivé imidazolé ou du diazabicycloundécane (DBU).

11. Utilisation selon l'une des revendications 5 à 10, **caractérisée en ce que** le durcisseur et/ou le catalyseur sont utilisés sous une forme encapsulée et le moment de la participation du durcisseur et/ou du catalyseur à la réaction peut être contrôlé par la libération ciblée de ceux-ci hors de la capsule.

12. Utilisation selon l'une des revendications 5 à 11, **caractérisée en ce que** l'on utilise un diluant réactif lors de la fabrication du polymère ignifuge.

13. Utilisation selon la revendication 12, **caractérisée en ce que** l'on met en oeuvre comme diluant réactif un composé qui est choisi dans le groupe constitué par le bis(3-glycidyloxypropyl)-tétraméthyldisiloxane, le triglycidyl-p-aminophénol, le cyclohexane diméthanol diglycidyl éther, le triglycidyl éther de glycérine, le néopentylglycol diglycidyl éther, le tétraglycidyl éther de pentaérythrite, le polypropylène glycol diglycidyl éther et le triméthylolpropane triglycidyl éther.

14. Utilisation selon l'une des revendications 5 à 13, **caractérisée en ce que** d'autres additifs et / ou charges sont incorporés dans le polymère ignifuge.

15. Utilisation selon l'une des revendications 5 à 14, **caractérisée en ce que** l'on effectue un durcissement thermique, durcissement par UV ou durcissement par jet d'électrons lors de la fabrication du polymère ignifuge.

16. Utilisation du prépolymère selon l'une des revendications 1 à 4 ou d'une composition de résine comprenant ce prépolymère pour la fabrication d'un corps moulé, d'un stratifié ou d'un pré-imprégné ou d'un revêtement, à titre d'adhésif ou de résine réparatrice.

17. Polymère ignifuge, fabriqué en utilisant un prépolymère selon l'une des revendications 1 à 4.

18. Polymère ignifuge selon la revendication 17, **caractérisé en ce qu'**il s'agit d'un duromère.

19. Polymère ignifuge selon la revendication 17 ou 18, **caractérisé en ce que** la teneur en phosphore du polymère se situe en dessous de 3 %.
